# EUROPEAN PATENT SPECIFICATION

(11) **EP 1 779 995 B1**
(45) Date of publication and mention of the grant of the patent: **04.03.2009**
(21) Application number: 05110212.7
(22) Date of filing: 31.10.2005
(51) Int. Cl.: B29C 53/60, B29C 61/00, A01K 87/00, B29C 70/08

(54) **Composite rod and method for making the same**
Verbundstange und Verfahren zur Herstellung derselben
Tige en composites et méthode de fabrication associée

(43) Date of publication of application: 02.05.2007
(73) Proprietor: Hong, Eugene, Taichung (TW)
(72) Inventor: Hong, Eugene, Taichung (TW)
(74) Representative: Martin, Philip John

(56) References cited:
- EP-A- 0 517 188
- EP-A- 0 943 237
- GB-A- 2 276 859
- US-A- 5 231 783
- PATENT ABSTRACTS OF JAPAN vol. 007, no. 179 (M-234), 9 August 1983 (1983-08-09) & JP 58 082721 A (SEKISUI KAGAKU KOGYO KK), 18 May 1983 (1983-05-18)

## Description

The invention relates to a composite rod, more particularly to a composite rod for fishing. The invention also relates to a method for making the composite rod.

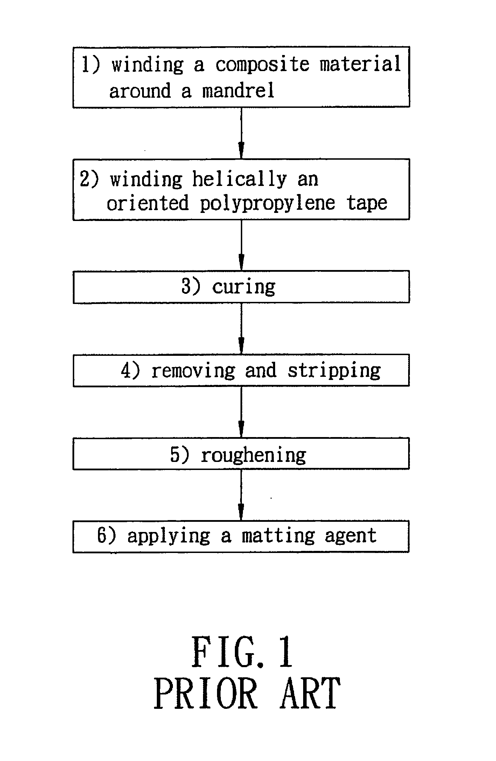

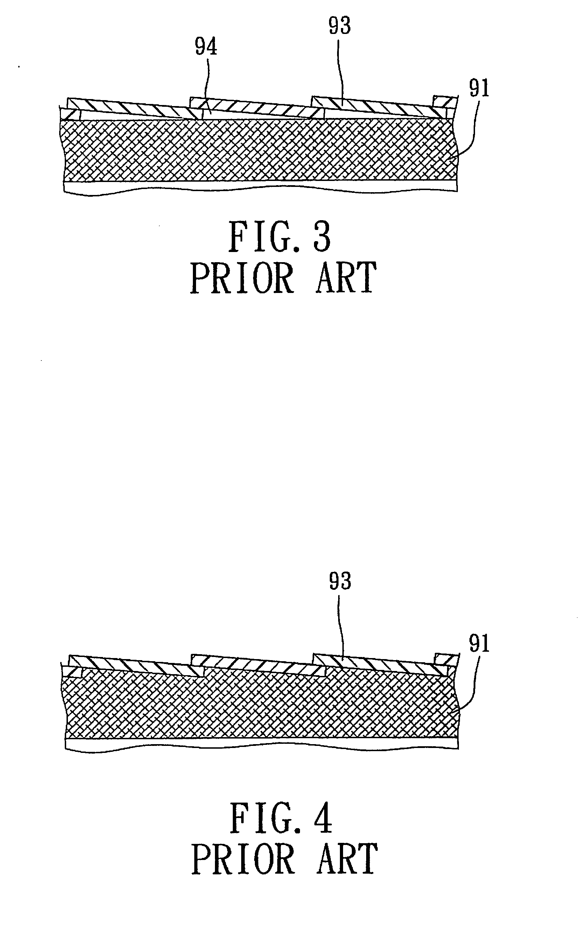

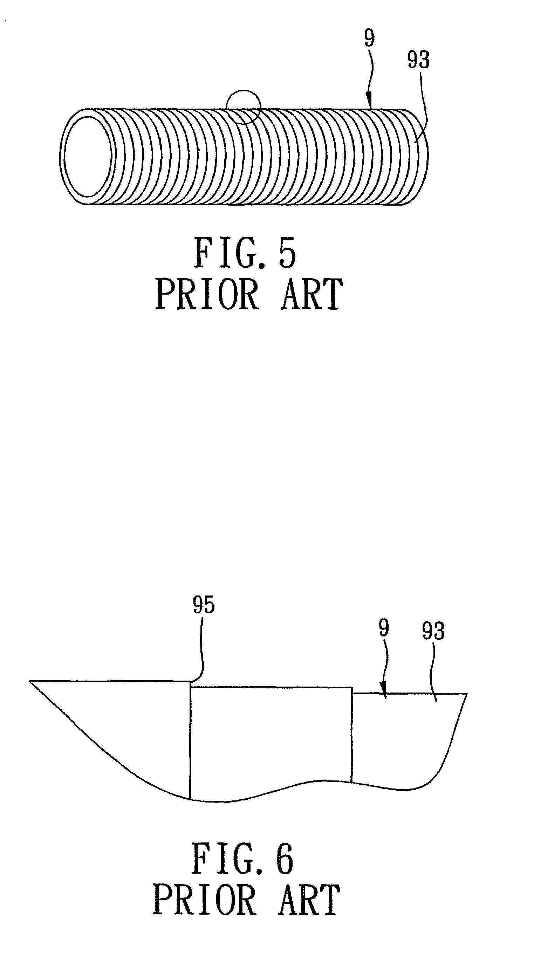

Referring to Figures 1 to 4, a conventional composite rod for fishing is made by a process including the steps of : winding a predetermined size of a composite material around a mandrel 92 to form a tubular layer 91 of the composite material on the mandrel 92, the composite material being composed of a resin and a reinforcing fabric, which is made of a carbon fiber or a glass fiber, and which is impregnated with the resin; winding helically an oriented polypropylene tape 93 around the tubular layer 91 to form a plurality of overlapping turns for fastening the tubular layer 91 on the mandrel 92; curing to obtain a semi-finished product; and removing the semi-finished product from the mandrel 92 and stripping the oriented polypropylene tape 93 to obtain a composite rod 9, as shown in Figure 5, which is then cut to a desired length.

Referring again to Figures 3 and 4, a plurality of vacant spaces 94 are formed after the oriented polypropylene tape 93 is wound helically around the tubular layer 91. The vacant spaces 94 are filled with the composite material after the curing step due to melting of the resin. Therefore, as shown in Figure 6, a plurality of sharp edges are formed on the composite rod 9, which can injure the user. Furthermore, a metallic luster is formed on the surface of the composite rod 9, which can result in discomfort when viewed by the user.

Referring again to Figure 1, in order to overcome the aforesaid shortcomings, the composite rod 9 is further processed by roughening the surface of the composite rod 9 and subsequently applying a matting agent on the roughened surface of the composite rod 9 by spraying. However, the integral structure of the reinforcing fabric of the composite material for the tubular layer 91 may be destroyed after roughening the surface of the composite rod 9. Therefore, the mechanical strength of the composite rod 9 is reduced undesirably. Furthermore, the matting agent increases the overall weight of the composite rod 9, and is liable to being stripped from the composite rod 9 after a period of use because the matting agent is adhered on the surface of the composite rod 9 by spraying.

Document US 5,231,783 discloses a fishing rod comprising a tube body made a reinforcing fabric impregnated with a resin and a longitudinal strip helically wound around said tube body and having two opposite longitudinal edges. The strip is helically wound around the composite tube body and has overlapping edges. In this process no matting layer is applied. Steps are formed on the outer periphery of the finished pipe-like member which serve as anti-slip means for an angler's hand gripping this rod.

Therefore, the object of the present invention is to provide a composite rod that can overcome the aforesaid drawbacks associated with the prior art.

In one aspect of this invention, a composite rod includes a tube body made of a composite material, a longitudinal polymeric strip, and a matting layer. The composite material includes a resin and a reinforcing fabric impregnated with the resin. The longitudinal polymeric strip is helically wound around the tube body, and has two opposite longitudinal edges. One of the edges abuts against and is substantially flush with the other of the edges. The matting layer is applied on the polymeric strip.

In another aspect of this invention, a method for making the composite rod includes the steps of:
a) forming a tube body made of a composite material around a mandrel, the composite material including a resin and a reinforcing fabric impregnated with the resin;
b) winding a polymeric strip around the tube body along a helical direction to form a plurality of non-overlapping turns with one of two opposite longitudinal edges of the polymeric strip abutting against and being flush with the other of the edges of the polymeric strip;
c) applying a matting layer on the polymeric strip;
d) winding helically a fastening tape around the matting layer to form a plurality of overlapping turns, thereby obtaining a semi-finished product;
e) curing the semi-finished product at a temperature lower than a melting temperature of the polymeric strip to obtain a cured product; and
f) stripping the fastening tape from the cured product.

Other features and advantages of the present invention will become apparent in the following detailed description of the preferred embodiments with reference to the accompanying drawings, of which:
Figure 1 is a flow diagram of a conventional method for making a composite rod;

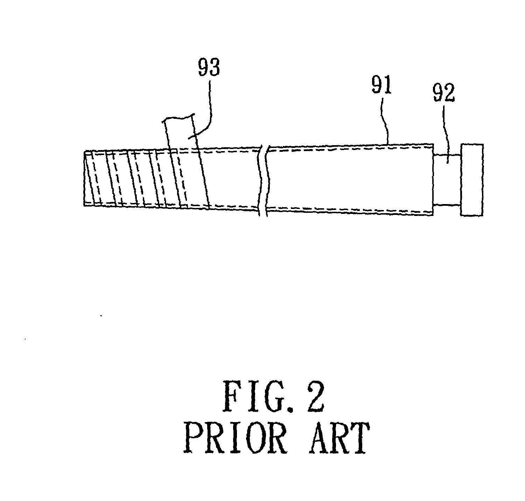

Figures 2 to 4 are schematic views showing consecutive steps of the conventional method;
Figure 5 is a perspective view of the composite rod made by the conventional method;
Figure 6 is an enlarged view of a part of the composite rod of Figure 5;

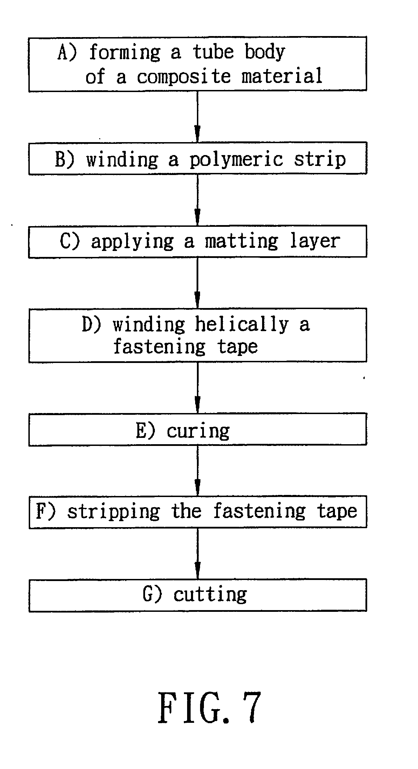

Figure 7 is a flow diagram of a preferred embodiment of a method for making a composite rod according to this invention;

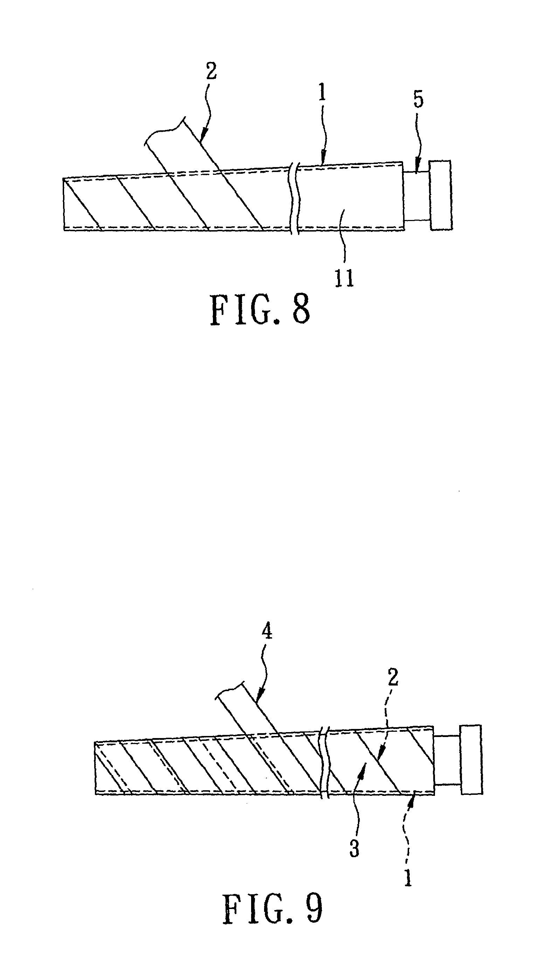

Figures 8 to 11 are schematic views showing consecutive steps of the preferred embodiment;

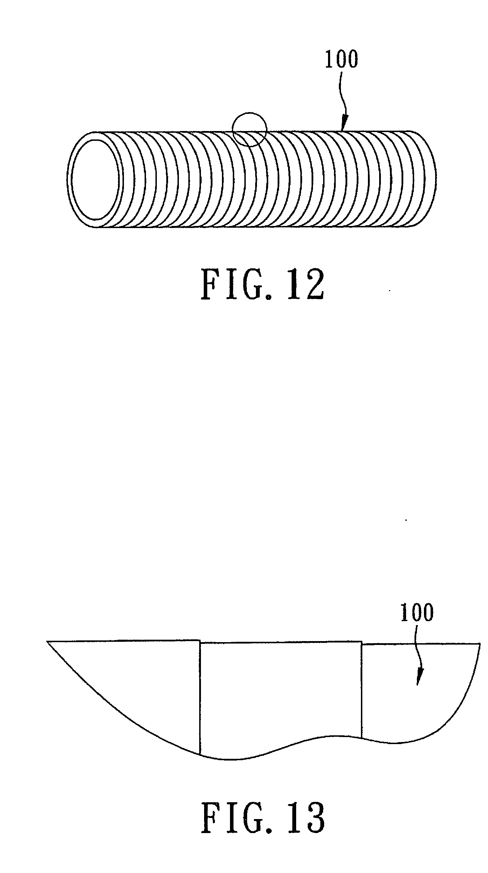

Figure 12 is a perspective view of a preferred embodiment of a composite rod according to this invention; and
Figure 13 is an enlarged view of a part of the composite rod of Figure 12.

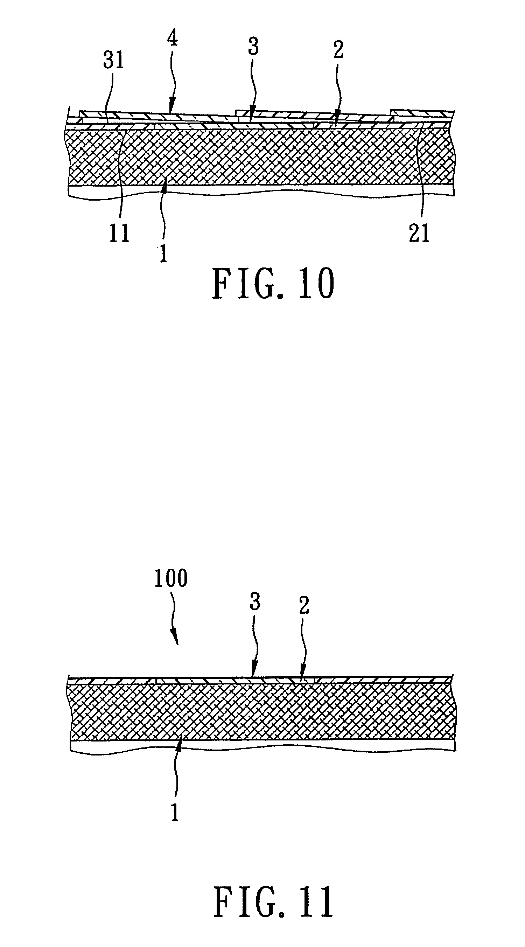

Referring to Figures 11 and 12, the preferred embodiment of a composite rod 100 according to this invention is shown to include a tube body 1 made of a composite material, a longitudinal polymeric strip 2, and a matting layer 3.

The composite material includes a resin and a reinforcing fabric impregnated with the resin. The reinforcing fabric is made of a carbon fiber, a glass fiber, or a combination thereof.

The longitudinal polymeric strip 2 is helically wound around the tube body 1, and has two opposite longitudinal edges. One of the edges abuts against and is substantially flush with the other of the edges. In the preferred embodiment, the polymeric strip 2 is composed of a fluoropolymer base layer and a binder applied on the fluoropolymer base layer. The fluoropolymer suitable for this invention is, for example, Teflon^{®} available from Du Pont. The binder suitable for this invention is, for example, pressure sensitive glue, self-adhesive acrylic glue, PVA glue, and the like. Preferably, the polymeric strip 2 is opaque. The matting layer 3 is applied on the polymeric strip 2.

Referring to Figure 7, the preferred embodiment of a method for making the composite rod 100 includes the steps of:

### A) forming a tube body made of a composite material:

Referring to Figure 8, a tube body 1 made of a composite material is formed around a mandrel 5. The composite material includes a resin and a reinforcing fabric impregnated with the resin.

### B) winding a polymeric strip:

A polymeric strip 2 is wound around an outer surface 11 of the tube body 1 along a helical direction to form a plurality of non-overlapping turns with one of two opposite longitudinal edges of the polymeric strip 2 abutting against and being flush with the other of the edges of the polymeric strip 2. The polymeric strip 2 has a melting temperature higher than that of the resin of the composite material 1, and includes a fluoropolymer.

### C) applying a matting layer:

Referring to Figures 9 and 10, a matting layer 3 is applied on an outer surface 21 of the polymeric strip 2.

### D) winding helically a fastening tape:

Referring again to Figures 9 and 10, a fastening tape 4 is wound helically around an outer surface 31 of the matting layer 3 to form a plurality of overlapping turns, thereby obtaining a semi-finished product. The fastening tape 4 is made of an oriented polypropylene.

### E) curing:

The semi-finished product is cured at a temperature lower than a melting temperature of the polymeric strip 2 to obtain a cured product. Preferably, the curing temperature is about 120 °C .

### F) stripping the fastening tape:

The cured product is removed from the mandrel 5, and the fastening tape 4 is stripped from the cured product so as to obtain the composite rod 100, as shown in Figures 11 and 12. If required, the composite rod 100 can be cut to a desired size.

In view of the aforesaid, the composite rod 100 and the method for making the same according to this invention have the following advantages:
1) The polymeric strip 2 is wound around the outer surface 11 of the tube body 1 made of the composite material so as to form a plurality of non-overlapping turns with one of two opposite longitudinal edges of the polymeric strip 2 abutting against and being flush with the other of the edges of the polymeric strip 2. Therefore, there is no vacant space formed between the polymeric strip 2 and the tube body 1. The composite rod 100 thus obtained has a relatively smooth surface, as shown in Figure 13.
2) Since the polymeric strip 2 has the characteristics of abrasive resistance and high temperature resistance, the composite material of the tube body 1 can be blocked by the polymeric strip 2 during the curing process, and the polymeric strip 2 will not fill the vacant spaces formed between the fastening tape 4 and the polymeric strip 2. Therefore, the roughening process required in the prior art can be avoided. The amount of matting layer 3 applied on the polymeric strip 2 can be decreased, which in turn results in a lower overall weight for the composite rod 100 as compared to the prior art.
3) The mechanical strength of the composite rod 100 can be improved by using the polymeric strip 2 wound around the tube body 1. Furthermore, the electric conductivity of the composite rod 100 can be reduced to a minimum due to the polymeric strip 2.
4) Since the matting layer 3 is applied on the polymeric strip 2 before curing, the binding strength between the matting layer 3 and the polymeric strip 2 can be improved after curing.

## Claims

1. A composite rod (100) comprising:
a tube body (1) made of a composite material including a resin and a reinforcing fabric impregnated with said resin;
a longitudinal polymeric strip (2) helically wound around said tube body (1), and having two opposite longitudinal edges, **characterized in that** one of said edges abutts against and is substantially flush with the other of said edges; and
a matting layer (3) is applied on said polymeric strip (2).

2. The composite rod (100) as claimed in Claim 1, **characterized in that** said reinforcing fabric is made of a fiber selected from the group consisting of a carbon fiber and a glass fiber.

3. The composite rod (100) as claimed in Claim 1, **characterized in that** said polymeric strip (2) has a melting temperature higher than that of said resin.

4. The composite rod (100) as claimed in Claim 3, **characterized in that** said polymeric strip (2) includes a fluoropolymer base layer and a binder applied on said fluoropolymer base layer.

5. A method for making a composite rod (100), comprising the steps of:
a) forming a tube body (1) made of a composite material around a mandrel (5), the composite material including a resin and a reinforcing fabric impregnated with the resin;
b) winding a polymeric strip (2) around the tube body (1) along a helical direction to form a plurality of non-overlapping turns with one of two opposite longitudinal edges of the polymeric strip (2) abutting against and being flush with the other of the edges of the polymeric strip (2);
c) applying a matting layer (3) on the polymeric strip (2);
d) winding helically a fastening tape (4) around the matting layer (3) to form a plurality of overlapping turns, thereby obtaining a semi-finished product;
e) curing the semi-finished product at a temperature lower than a melting temperature of the polymeric strip (2) to obtain a cured product; and
f) stripping the fastening tape (4) from the cured product.

6. The method as claimed in Claim 5, **characterized in that** the polymeric strip (2) includes a fluropolymer.

## Patentansprüche

1. Verbundstange (100) umfassend:
einen Rohrkörper (1), der aus Verbundmaterial hergestellt ist, einschließen ein Harz und einen Verstärkungsstoff, der mit dem Harz imprägniert wurde;
einen länglichen polymeren Streifen (2), der spiralenförmig um den Rohrkörper (1) geschlungen ist, und zwei entgegengesetzte längliche Ränder hat, **dadurch gekennzeichnet, dass** einer der Ränder an den anderen Rand angrenzt und im Wesentlichen mit diesem Rand eben ist; und
eine Mattierungsschicht (3) auf den polymeren Streifen (2) aufgetragen wird.

2. Verbundstange (100) nach Anspruch 1, **dadurch gekennzeichnet, dass** der Vorstärkungsstoff aus einer Faser hergestellt wurde, die ausgewählt ist aus der Gruppe bestehend aus einer Kohlenstofffaser und einer Glasfaser.

3. Verbundstange (100) nach Anspruch 1, **dadurch gekennzeichnet, dass** der polymere Streifen (2) eine Schmelztemperatur hat, die höher ist als die des Harzes.

4. Verbundstange (100) nach Anspruch 3, **dadurch gekennzeichnet, dass** der polymere Streifen (2) eine Schicht auf Fluorpolymerbasis und ein Bindemittel, das auf die Schicht auf Fluorpolymerbasis aufgetragen wird, einschließt.

5. Verfahren zur Herstellung einer Verbundstange (100), umfassend die folgenden Schritte:
a) Bilden eines Rohrkörper (1), der aus Verbundmaterial hergestellt wurde, um eine Pinole (5), wobei das Verbundmaterial ein Harz und einen Verstärkungsstoff, der mit dem Harz imprägniert wurde, einschließt;
b) Schlingen eines polymeren Streifens (2) um den Rohrkörper (1) entlang einer spiralenförmigen Richtung, um mehrere nichtüberlappende Windungen zu bilden, wobei einer der zwei entgegengesetzten länglichen Ränder des polymeren Streifens (2) an den anderen Rand des polymeren Streifens (2) angrenzt und mit diesem Rand eben ist;
c) Auftragen einer Mattierungsschicht (3) auf den polymeren Streifen (2);
d) spiralenförmiges Schlingen eines Befestigungsfilms (4) um die Mattierungsschicht (3), um mehrere überlappende Windungen zu bilden, wodurch ein halbfertiges Produkt entsteht;
e) Härten des halbfertigen Produkts bei einer Temperatur, die niedriger ist, als eine Schmelztemperatur des polymeren Streifens (2), um ein gehärtetes Produkt zu erhalten; und
f) Abziehen des Befestigungsfilms (4) vom gehärteten Produkt.

6. Verfahren nach Anspruch 5, **dadurch gekennzeichnet, dass** der polymere Streifen (2) einen Fluorpolymer einschließt.

## Revendications

1. Tige composite (100), comprenant:
une carcasse de tube (1), faite d'un matériau composite incluant une résine et un tissu de renfort imprégné de ladite résine;
une bande polymère longitudinale (2) enroulée de manière hélicoïdale autour de ladite carcasse de tube (1) et comportant deux bords longitudinaux opposés, **caractérisée en ce qu'**un desdits bords bute contre l'autre desdits bords et est substantiellement affleuré avec celui-ci; et
une couche de matage (3) est appliquée sur ladite bande polymérique (2).

2. Tige composite (100) selon la revendication 1, **caractérisée en ce que** ledit tissu de renfort est fait d'une fibre sélectionnée dans le groupe constitué d'une fibre de carbone et d'une fibre de verre.

3. Tige composite (100) selon la revendication 1, **caractérisée en ce que** ladite bande polymère (2) a une température de fusion plus élevée que celle de ladite résine.

4. Tige composite (100) selon la revendication 3, **caractérisée en ce que** ladite bande polymère (2) inclut une couche de base fluoropolymère et un liant appliqué sur ladite couche de base fluoropolymère.

5. Procédé pour fabriquer une tige composite (100), comprenant les étapes suivantes :
a) former une carcasse de tube (1) faite d'un matériau composite autour d'un mandrin (5), le matériau composite incluant une résine et un tissu de renfort imprégné de la résine;
b) entourer une bande polymère (2) autour de la carcasse de tube (1) le long d'une direction hélicoïdale pour former une pluralité de spires ne se chevauchant pas, l'un des deux bords longitudinaux opposés de la bande polymère (2) butant contre l'autre des bords de la bande polymère (2) et affleurant avec celui-ci;
c) appliquer une couche de matage (3) sur la bande polymère (2);
d) enrouler hélicoïdalement une bande d'attache (4) autour de la couche de matage (3) pour former une pluralité de spires se chevauchant, pour obtenir un produit semi-fini ;
e) durcir le produit semi-fini à une température plus basse qu'une température de fusion de la bande polymère (2) pour obtenir un produit durci ; et
f) retirer la bande d'attache (4) du produit durci.

6. Procédé selon la revendication 5, **caractérisé en ce que** la bande polymère (2) inclut un fluoropolymère.
